# EUROPEAN PATENT SPECIFICATION

(11) **EP 2 201 852 B1**
(45) Date of publication and mention of the grant of the patent: **16.05.2012**
(21) Application number: 09178254.0
(22) Date of filing: 08.12.2009
(51) Int. Cl.: A41D 19/00, C08L 9/04, C08L 11/02, B29C 41/14, B29C 41/22, D06N 3/10, D06N 3/18

(54) **Chemical resistant glove**
Chemikalienechter Handschuh
Gant résistant aux agents chimiques

(30) Priority: 08.12.2008 JP 2008312025; 18.12.2008 JP 2008322118
(43) Date of publication of application: 30.06.2010
(73) Proprietor: SHOWA GLOVE Co., Himeji-shi Hyogo 670-0802 (JP)
(72) Inventor: Ikeda, Yuji, Himeji-shi Hyogo 670-0802 (JP); Shudo, Katsuki, Himeji-shi Hyogo 670-0802 (JP); Aoyagi, Yukari, Himeji-shi Hyogo 670-0802 (JP)
(74) Representative: Vossius & Partner

(56) References cited:
- EP-A- 1 518 471
- FR-A- 2 448 307
- JP-A- 2007 106 994
- US-A1- 2005 221 073

## Description

The present invention relates to a chemical resistant glove coated with a rubber, and particularly to a chemical resistant glove that is obtained by coating a fabric glove with a chloroprene-based rubber, which has not only greatly improved chemical resistance, safety and reliability, but also tactile feeling and abrasion resistance.

Liquid proof gloves in which the surface of a fabric glove has been coated with a rubber or a resin are widely used as working gloves. Examples of the rubber or the resin to be applied include a natural rubber (NR), a styrene-butadiene rubber (SBR), a nitrile-butadiene rubber (NBR), a chloroprene rubber (CR), a polyurethane (PU), and a vinyl chloride resin (PVC). Among these, a chloroprene rubber is known to be excellent in weather resistance, thermal resistance, oil resistance, and chemical resistance, especially in acid resistance and alkali resistance. Therefore, gloves in which the surface of gloves made of a fiber is covered with a chloroprene rubber have been widely used as chemical resistant gloves.

As a chloroprene rubber for gloves, for example, in Japanese Laid-open Patent Publication 2007-106994, a chloroprene-based polymer latex for gloves that is well balanced with regard to flexibility lasting, tensile strength and tensile elongation has been proposed.

However, even if a chloroprene-based polymer such as mentioned above is applied, when a coat layer is formed of only a single layer of a chloroprene rubber, overlooked defects of the coating may result in an accident caused by a hazardous liquid during use. On the other hand, if a multilayer structure is formed in order to solve these problems, a resulting glove becomes hard and stiff in tactile feeling, resulting in a problem that the glove is difficult to use.

In addition, rubber-coated gloves are problematic in that when a person grips an object with a gloved hand, the object is prone to slip. This problem is more serious particularly when the surface of the glove is wet with a chemical liquid.

In the light of the aforementioned situations, it is hence an object of the present invention to solve the above-mentioned problems in the prior art and to provide gloves for works handling chemicals such as acidic chemicals and alkaline chemicals which are not only improved in safety and reliability against chemicals, without impairing tactile feeling and workability, but also are excellent in abrasion resistance.

A first aspect of the present invention relates to a chemical resistant glove which comprises a chloroprene-based rubber layer as a first layer and a mixed rubber layer containing a nitrile-butadiene-based rubber and a chloroprene-based rubber as a second layer sequentially formed on a fabric glove, wherein a mixing ratio of the nitrile-butadiene-based rubber and the chloroprene-based rubber in the mixed rubber layer as the second layer is 60 : 40 to 10 : 90 in a solid weight ratio.

A second aspect of the present invention relates to the chemical resistant glove of the first aspect, wherein the mixing ratio of the nitrile-butadiene-based rubber and the chloroprene-based rubber in the mixed rubber layer as the second layer is 40 : 60 to 20 : 80 in a solid weight ratio.

A third aspect of the present invention relates to a chemical resistant glove of any of the preceding aspects, wherein a chloroprene-based rubber layer as an intermediate layer is further formed between the chloroprene-based rubber layer as the first layer and the mixed rubber layer containing the nitrile-butadiene-based rubber and the chloroprene-based rubber as the second layer.

A fourth aspect of the present invention relates to a chemical resistant glove of any of the preceding aspects, wherein nitrile-butadiene-based rubber particles are contained in the mixed rubber layer as the second layer in an amount of 20 to 60 parts by weight, on a solid content basis, based on 100 parts by weight of a latex of the mixed rubber layer as the second layer .

A fifth aspect of the present invention relates to a chemical resistant glove of the fourth aspect, wherein a content of the nitrile-butadiene-based rubber particles is 30 to 50 parts by weight, on a solid basis, based on 100 parts by weight of the mixed rubber layer as the second layer.

A sixth aspect of the present invention relates to a chemical resistant glove of any of the preceding aspects, wherein a thickness of the first layer is in a range of from 0.18 to 0.23 mm.

A seventh aspect of the present invention relates to a chemical resistant glove of any of the preceding aspects, wherein a thickness of the second layer is in a range of from 0.14 to 0.18 mm.

An eighth aspect of the present invention relates to a chemical resistant glove of any of the third to seventh aspect, wherein a thickness of the intermediate layer is in a range of from 0.18 to 0.23 mm.

According to the present invention, a glove that is excellent in chemical resistance, good in protection and reliability, and good in tactile feeling and abrasion resistance is provided by forming a chloroprene-based rubber layer as the first layer and a mixed rubber layer containing a nitril butadiene-based rubber and a chloroprene-based rubber as the second layer sequentially on a fabric glove.

Moreover, a glove that has further improved chemical resistance is provided by further forming a chloroprene-based rubber layer as an intermediate layer between the first layer and the second layer.

Furthermore, a glove that is excellent in slip resistance addition to the above mentioned effects is provided by causing the mixed rubber layer to contain nitrile-butadiene-based rubber particles.

In a first embodiment, the chemical resistant glove of the present invention is characterized in that a chloroprene-based rubber layer as a first layer and a mixed rubber layer containing a nitrile-butadiene-based rubber and a chloroprene-based rubber as a second layer sequentially formed on a fabric glove, wherein a mixing ratio of the nitrile-butadiene-based rubber and the chloroprene-based rubber in the mixed rubber layer as the second layer is 60 : 40 to 10 : 90 in a solid weight ratio.

In a second embodiment, the chemical resistant glove of the present invention is characterized in that a chloroprene-based rubber layer is further formed between the chloroprene-based rubber layer as the first layer and the mixed rubber layer of the nitrile-butadiene-based rubber and the chloroprene-based rubber as the second layer in the foregoing chemical resistant glove.

In a third embodiment, the chemical resistant glove of the present invention is characterized in that nitrile-butadiene-based rubber particles are contained in the mixed rubber layer as the second layer.

Various types of fibers can be used as the fabric glove for use in the present invention. For example, gloves produced by knitting cotton, polyester, polyurethane, high-strength drawn polyethylene, e.g., DYNEEMA (registered trademark), aramide, e.g., KEVLAR (registered trademark) or their mixed spun yarns, or by sewing woven fabrics or nonwoven fabrics can be used.

In the present invention, an aqueous dispersion latex of chloroprene polymers and/or chloroprene-based copolymers of chloroprene and other copolymerizable components are common to provide the chloroprene-based rubber layer, which is the first layer. But, solvent-based solutions and solvent-based dispersion liquids can also be used. Exemplary commercially-available products include SHOPRENE (registered trademark) 671A (produced by Showa Denko K.K.), SHOPRENE (registered trademark) 571 (produced by Showa Denko K.K.), SHOPRENE (registered trademark) 750 (produced by Showa Denko K.K.), SKYPRENE (registered trademark) latex LA-502 (produced by TOSOH CORPORATION), DENKA CHLOROPRENE (registered trademark) LM-61 (produced by DENKI KAGAKU KOGYO KABUSHIKI KAISHA), DENKA CHLOROPRENE (registered trademark) LM-50 (produced by DENKI KAGAKU KOGYO KABUSHIKI KAISHA), DENKA CHLOROPRENE (registered trademark) LV-60N (produced by DENKI KAGAKU KOGYO KABUSHIKI KAISHA), and Lipren-T (produced by PolymerLatex). These are used singly or in combination of two or more, if necessary.

The thickness of the first layer after curing is preferably in a range of from about 0.18 mm to about 0.23 mm. An attempt to form a chloroprene-based rubber layer having a thickness of less than 0.18 mm tends to cause penetration of a raw material to the inside of a fabric glove and, as a result, a resulting glove may give bad tactile feeling when being worn. On the other hand, an attempt to form a chloroprene-based rubber layer having a thickness of more than 0.23 mm tends to impair uniform adhesion of a raw material to gloves made of a fiber and, as a result, uniform chemical resistance may not be obtained with a resulting glove.

In the present invention, examples of the nitrile-butadiene-based rubber (hereinafter, a nitrile-butadiene-based rubber is sometimes referred to as an NBR) to be used together with the chloroprene-based rubber as the mixed rubber layer, which is the second layer, include Nipol (registered trademark) Lx-550 (produced by ZEON CORPORATION), Nipol (registered trademark) Lx-551 (produced by ZEON CORPORATION), Nipol (registered trademark) Lx-556 (produced by ZEON CORPORATION), PERBUNAN (registered trademark) N LATEX VT-LA (produced by PolymerLatex), PERBUNAN (registered trademark) N LATEX X 1130 (produced by PolymerLatex), PERBUNAN (registered trademark) N LATEX X 1138 (produced by PolymerLatex), PERBUNAN (registered trademark) N LATEX X 1150 (produced by PolymerLatex), PERBUNAN (registered trademark) N LATEX X 1172 (produced by PolytnerLatex), PERBUNAN (registered trademark) N LATEX 2890 (produced by PolymerLatex), PERBUNAN (registered trademark) N LATEX 3415 M (produced by PolymerLatex), PERBUNAN (registered trademark) N LATEX X 1200 (produced by PolymerLatex), Synthomer (registered trademark) EL2675 (produced by Synthomer), Synthomer (registered trademark) 6311 (produced by Synthomer), Synthomer (registered trademark) 6501 (produced by Synthomer), Synthomer (registered trademark) 6617 (produced by Synthomer), and Synthoner (registered trademark) 6710 (produced by Synthomer). These are used singly or in combination of two or more, if necessary.

The thickness of the second layer after curing is preferably in a range of from about 0.14 mm to about 0.18 mm. An attempt to form a mixed rubber layer having a thickness of less than 0.14 mm tends to be difficult to form a film and thus it tends to be difficult to form the second layer. On the other hand, an attempt to form a mixed rubber layer having a thickness of more than 0.18 mm tends to cause a resulting glove to become stiffer.

In the mixed rubber layer as the second layer, the mixing ratio of the NBR-based rubber and the chloroprene-based rubber, in a solid weight ratio, is 60 : 40 to 10 : 90, and preferably 40 : 60 to 20 : 80. If the proportion of the NBR-based rubber is more than the foregoing ratio, a glove having a stiff tactile feeling is produced. If the proportion of the NBR-based rubber is less than the foregoing ratio, problems that a latex coagulates at the time of mixing and that the abrasion resistance decreases are caused and, as a result, it may become difficult to produce a glove.

As to the mixing of a latex of the NBR-based rubber and a latex of the chloroprene-based rubber, it is desirable to use an aqueous dispersion latex or solution in the same solvent system or dispersions in the same solvent system.

In the present invention, as to the chloroprene-based rubber latex to be used for the chloroprene-based rubber layer of the first layer or the intermediate layer and the chloroprene-based rubber latex to be
mixed with the NBR-based latex in the mixed rubber layer of the second layer, the same latex or different latices selected from the above-mentioned chloroprene-based polymer latex and latex of chloroprene-based copolymers may be used.

The thickness of the intermediate layer after curing is preferably in a range of from about 0.18 mm to about 0.23 mm. If the thickness is less than 0.18 mm, there is a tendency that a film is difficult to be formed and thus it is difficult to form an intermediate layer. If the thickness exceeds 0.23 mm, uniform film forming tends to be impaired.

The viscosity of the chloroprene-based rubber latex as the first and the intermediate layers or the latex of the mixed rubber composed of an NBR-based rubber and a chloroprene-based rubber as the second layer may be important for adjustment of the coating film thickness or workability of application, and it is preferably in V6 viscosity, 2800 to 3200 mPa • sec for the first layer, 1500 to 2000 mPa • sec for the second layer, and 1800 to 2200 mPa • sec for the intermediate layer.

The slip resistance of the chemical resistant glove in the present invention can be further improved by adding NBR-based rubber particles to the mixed rubber layer as the second layer. The NBR-based rubber particles are less prone to leave from a glove after the production of the glove and thus exhibit higher slip resistance in comparison to particles of other resins or rubbers.

The shape of the NBR-based rubber particles is not particularly limited, and examples thereof include a spherical shape, a polyhedral shape, a hemispherical shape, and a bowl-like shape. Moreover, a product prepared by pulverizing a sheet-shaped NBR-based rubber can also be used suitably. The sheet-shaped NBR-based rubber is produced by, for example, incorporating commonly-used rubber additives such as clay, titanium, plasticizers, vulcanizing agents, vulcanization accelerators, antiaging agents, and sulfur in NBR-based rubbers. Although the pulverizing method is not particularly limited, freeze pulverization is preferred because pulverization heat is often generated, which may cause change in quality or degradation of the rubber. Examples of commercial names of NBR-based particles include BAYMOD (registered trademark) N34.52 (produced by Bayer), BAYMOD (registered trademark) N34.82 (produced by Bayer), BAYMOD (registered trademark) NXL34.23VP (produced by Bayer), and BAYMOD (registered trademark) NXL34.12 (produced by Bayer). These are used singly or in combination of two or more, if necessary.

The size of the NBR-based particles is preferably 1000 µm or less, more preferably 50 to 850 µm, and even more preferably 100 to 710 µm. If it is greater than 1000 µm, the uniform adhesion of the particles tends to be impaired. If it is excessively small, a sufficient slip resisting effect tends not to be obtained.

The NBR-based rubber particles are preferably contained in an amount of 20 to 60 parts by weight, in a solid content basis, based on 100 parts by weight of the latex of the mixed rubber layer as the second layer. If the amount of the NBR-based rubber particles is less than 20 parts by weight, a sufficient slip resisting effect is difficult to be obtained under dry conditions and under wet conditions. On the other hand, if it exceeds 60 parts by weight, the resulting gloves may come to have harder tactile feeling or it is difficult to obtain gloves to which particles adhere uniformly.

As the method for forming the first layer, the second layer and the intermediate layer on a fabric glove, dipping in a latex liquid, spray coating, coating with a brush or the like can be used. At the time of coating, it is common and convenient to set a fabric glove on a hand mold. As the hand mold, metal molds, ceramic molds, wooden molds, plastic molds, and so on can be used.

In view of, for example, the easiness of processing, and the flexibility or the stability of strength of a rubber coating film after vulcanization, it is desirable to blend to the latex additives such as a metal oxide, a vulcanization accelerator, sulfur, a surfactant, an antiaging agent, a pH adjuster, a plasticizer, or a filler.

Examples of the metal oxide include zinc oxide, lead oxide, and trilead tetraoxide. These are used singly or in combination of two or more, if necessary. The amount of the metal oxide is preferably 1 to 10 parts by weight to 100 parts by weight of the solid content of a rubber latex. If the amount is less than 1 part by weight, it is difficult to obtain tensile strength and basic characteristics of modulus due to insufficient crosslinking. If the amount is more than 10 parts by weight, the modulus may become excessively high and a resulting glove may become stiff.

As the vulcanization accelerator, thiuram-based, dithiocarbamate-based, thiourea-based and guanidine-based vulcanization accelerators are commonly used for chloroprene-based rubber latex. Among those, the thiuram-based vulcanization accelerators and the dithiocarbamate-based vulcanization accelerators are particularly preferred. Examples of the thiuram-based valcanization accelerator include tetraethylthiuram disulfide, and tetrabutylthiuram disulfide. Examples of the dithiocarbamate-based vulcanization accelerator include sodium dibutylthiodicarbamate, zinc dibutylthiodicarbamate, and zinc diethylthiodicarbamate. Examples of the thiourea-based vulcanization accelerator include ethylenethiourea, diethylthiourea, trimethylthiourea, and N,N'-diphenylthiourea. Among these, N,N'-diphenylthiourea is particularly preferable. Examples of the guanidine-based vulcanization accelerator include diphenylguanidine and diorthotoluidineguanidine. These are used singly or in combination of two or more, if necessary.

The amount of the vulcanization accelerator is preferably 0.5 to 5.0 parts by weight to 100 parts by weight of the solid content of a rubber latex. If the amount is less than 0.5 parts by weight, the vulcanization acceleration effect may be insufficient. If the amount is more than 5.0 parts by weight, problems may arise. For example, even if a glove is produced, the resulting glove may feel hard or cause scorching by initial vulcanization.

When vulcanization proceeds poorly with only a vulcanization accelerator, sulfur is usually used in addition. The amount of sulfur is preferably 0.1 to 3.0 parts by weight to 100 parts by weight of the solid content of a rubber latex. If the amount is less than 0.1 parts by weight, it may be difficult to obtain tensile strength and basic characteristics of modulus due to insufficient crosslinking. If the amount is more than 3.0 parts by weight, there is a tendency that the modulus becomes excessively high and a resulting glove tends to become stiff.

Examples of the surfactant include sodium alkylsulfate, sodium alkylbenzenesulfonate, sodium salt of naphthalenesulfonic acid-formaldehyde condensate, rosin acid soap, and fatty acid soap. These are used singly or in combination of two or more, if necessary.

The amount of the surfactant is preferably 0.1 to 10.0 parts by weight to 100 parts by weight of the solid content of a rubber latex. If the amount is less than 0.1 parts by weight, the latex tends to become unstable. If the amount exceeds 10.0 parts by weight, the latex tends to become excessively stable and it becomes difficult to form a film.

Examples of the antiaging agent include naphthylamine-based compounds, diphenylamine-based compounds, p-phenylenediamine-based compounds, quinoline-based compounds, hydroquinone derivative-based compounds, monophenol-based compounds, bisphenol-based compounds, polyphenol-based compounds, imidazole-based compounds, nickel dithiocarbamate-based compounds, phosphite ester-based compounds, organic thioacid-based compounds, and thiourea-based compounds.

Examples of the naphthylamine-based compounds include phenyl-1-naphthylamine and phenyl-p-naphthylamine. Examples of the diphenylamine-based compounds include 4,4-bis(α,α-dimethylbenzyl)diphenylamine, p-(p-toluenesulfonylamide)dophenylamine, alkylated diphenylamine and octylated diphenylamine. Examples of the p-phenylenediamine-based compounds include N,N'-diphenyl-p-phenylenediamine, N-phenyl-N'-isopropyl-p-phenylenediamine, N,N'-di-2-naphthyl-p-phenylenediamine, N-phenyl-N'-(1,3-dimethylbutyl)-p-phenylenediamine and N-phenyl-N'-(3-methacryloyloxy-2-hydroxypropyl)-p-phenylenediamine. Examples of the quinoline-based compounds include a 2,2,4-trimethyl-1,2-dihydroquinoline polymer and 6₋ethoxy-1,2-dihydro-2,2,4-trimethylquinoline. Examples of the hydroquinone derivative-based compounds include hydroquinone, methoquinone and 2,5-diphenyl-p-benzoquinone. Examples of the monophenol-based compounds include 2,6-di-tert-butyl-4-methyl phenol, mono(α-methylbenzyl)phenol, di(α-methylbenzyl)phenol and tri(α-methylbenzyl)phenol. Examples of the bisphenol-based compounds include 2,2'-methylenebis(4-methyl-6-tert-butyl phenol), 4,4'-butylidenebis(3-methyl-6-tert-butyl phenol) and 4,4'-thiobis(3-methyl-6-tert-butylphenol). Examples of the polyphenol-based compounds include 2,5-di-tert-butylhydroquinone and 2,5-di-tert-amyl hydroquinone. Examples of the imidazole-based compounds include 2-mercaptobenzimidazole, 2-mercaptomethylbenzimidazole and zinc salts of 2-mercaptobenzimidazole. Examples of the nickel dithiocarbamate-based compounds include nickel diethyldithiocarbamate and nickel dibutyldithiocarbamate. Examples of the phosphite-based compounds include tris(nonylphenyl)phosphite. Examples of the organic thioacid-based compounds include dilauryl thiodipropionate. Examples of the thiourea-based compounds include 1,3-bis(dimethylaminopropyl)-2-thiourea and tributylthiourea. These are used singly or in combination of two or more, if necessary. Among these, monophenol-based compounds or bisphenol-based compounds are preferable.

The amount of the antiaging agent is preferably 0.5 to 5.0 parts by weight to 100 parts by weight of the solid content of a rubber latex. If the amount is less than 0.5 parts by weight, it may be difficult to obtain a sufficient retarding effect of degradation. If the amount is more than 5.0 parts by weight, the retarding effect of degradation is not enhanced and the strength may decrease occasionally.

As a pH adjuster, an alkali or a weak acid such as amino acid or acetic acid may be used for the purpose of stabilizing a latex or adjusting the thickness of a coating film. Examples of the alkali include potassium hydroxide and ammonia and examples of the weak acid include glycine. These are used singly or in combination of two or more, if necessary. It is desirable that the pH adjuster be added in the form of an aqueous solution before use so that the stability of a latex is not impaired.

As to the amount of the pH adjuster in a compound using a chloroprene-based rubber latex, it is desirable to add the pH adjuster so that the pH becomes 10.0 to 11.5 when all additives including the pH adjuster are incorporated. Specifically, it is more desirable to add the pH adjuster so that the pH becomes 10.0 to 10.5. If the pH is lower than 10.0, the latex may become unstable and solidify. If the pH exceeds 11.5, the latex may become excessively stable and the latex may be difficult to coagulate and, as a result, it tends to be difficult to form a rubber film.

In a compound in which a chloroprene-based rubber latex and an NBR-based rubber latex are mixed, it is desirable to add a pH adjuster so that the pH becomes 9.0 to 10.5 when all additives including the pH adjuster are compounded. Specifically, it is more desirable to add a pH adjuster so that the pH becomes 10.0 to 10.5. If the pH is lower than 9.0, the latex may become unstable and solidify. If the pH exceeds 10.5, the latex comes to contain an excess alkali, so that the latex may solidify occasionally.

Examples of the plasticizer include phthalate esters such as dimethyl phthalate, diethyl phthalate, dibutyl phthalate, diisobutyl phthalate, dioctyl phthalate, butyloctyl phthalate, di(2-ethylhexyl) phthalate, diisooctyl phthalate, and diisodecyl phthalate; fatty acid esters such as dimethyl adipate, diisobutyl adipate, di(2-ethylhexyl) adipate, diisooctyl adipate, diisodecyl adipate, octyldecyl adipate, di(2-ethylhexyl) azelate, diisooctyl azelate, diisobutyl azelate, dibutyl sebacate, di(2-ethylhexyl) sebacate and diisooctyl sebacate; trimellitate esters such as isodecyl trimellitate, octyl trimellitate, n-octyl trimellitate, and isononyl trimellitate; di(2-ethylhexyl) fumarate, diethylene glycol monooleate, glyceryl monoricinolate, trilauryl phosphate, tristearyl phosphate, tri-(2-ethylhexyl) phosphate, tricresyl phosphate, epoxidized soybean oil, and polyether ester. These are used singly or in combination of two or more, if necessary.

The amount of the plasticizer is preferably 0.001 to 10.0 parts by weight to 100 parts by weight of the solid content of a rubber latex. If the amount is less than 0.001 parts by weight, plasticization tends to be insufficiently. If the amount exceeds 10.0 parts by weight, bleeding of the plasticizer tends to occur.

Examples of the inorganic filler include oxide fillers, carbonate fillers, silicate filler, and nitride fillers. Examples of the oxide fillers include silica, titanium oxide, magnesium oxide, diatomaceous earth, alumina, iron oxide and tin oxide. Among those, silica, titanium oxide and iron oxide are preferable. Examples of the carbonate fillers include calcium carbonate, magnesium carbonate and zinc carbonate. Among those, calcium carbonate is preferable. Examples of the silicate fillers include aluminum silicates such as clay, kaolinite and pyrophyllite; magnesium silicates such as talc calcium silicates such as wollastonite and xonotlite; bentonite, glass beads and glass fiber. Among those, aluminum silicates, magnesium silicates and bentonite are preferable. These are used singly or in combination of two or more, if necessary.

The amount of the filler is preferably 5 to 15 parts by weight to 100 parts by weight of the solid content of a rubber latex. If the amount is less than 5 parts by weight, blisters tend to be formed during a cure step in the glove production. If the amount exceeds 15 parts by weight, the stability of a rubber latex may be impaired occasionally.

In the present invention, additives other than those mentioned above, for example, pigments, colorants, wetting agents, and defoaming agents, may be appropriately added, if necessary, to a chloroprene-based rubber latex or a mixture of a chloroprene-based rubber latex and an NBR-based rubber latex.

The present invention is described in more detail with reference to examples below, but the present invention is not limited to the examples.

In the following examples and comparative examples, the thickness of both a first layer and an intermediate layer was 0.2 mm and the thickness of a second layer was 0.15 mm.

The raw materials used in the following examples and comparative examples are shown in Table 1.

**Table 1**

| Trade names | Raw materials | Manufacturers |
|---|---|---|
| SHOPRENE (registered trademark) 671 A | chloroprene rubber latex | Showa Denko K.K. |
| PERBUNAN (registered trademark) N LATEX X 1150 | NBR latex | Polymer Latex GmbH |
| Nipol (registered trademark) Lx470A | SBR latex | ZEON CORPORATION |
| DARVAN WAQ | surfactant Inc. | R.T. Vanderbilt Company, |
| DARVAN SMO | surfactant | R.T. Vanderbilt Company, Inc. |
| NOCCELER (registered trademark) BZ | vulcanization accelerator | OUCHI SHINKO CHEMICAL INDUSTRIAL CO.,LTD. |
| Vulkanox BKF | antiaging agent | LANXESS K.K. |
| Nopco (registered trademark) DF-122-NS | defoaming agent | SAN NOPCO LIMITED |
| A-7075 | thickener | TOAGOSEI CO., LTD. |
| CHROMOFINE BLUE HS-4 | pigment | Dainichiseika Color & Chemicals Mfg.Co..Ltd. |
| BAYMOD (registered trademark) NXL32.12 | NBR particles * | LANXESS K.K. |
| trademark) 640 | chloroprene rubber (CR) | TOSOH CORPORATION |
| SANCELER (registered trademark) 22-C | vulcanization accelerator | SANSHIN CHEMICAL INDUSTRY CO.,LTD |
| Nipol (registered trademark) 1502 | styrene-butadiene rubber (SBR) | ZEON CORPORATION |
| NOCCELER (registered trademark) DM | vulcanization accelerator | OUCHI SHINKO CHEMICAL INDUSTRIAL CO.,LTD. |

| | | |
|---|---|---|
| * The particles of 50 µ m or smaller were removed with a sieve and then used. (The particle diameter was not larger than 700 µ m and not smaller than 50 µm.) | | |

### Example 1

A cotton-polyester (50 : 50) mixed-spun seamless glove knitted with a 18-gauge knitter was set on a ceramic hand mold, followed by dipping into a coagulant bath. A coagulant liquid composed of methanol and calcium nitrate (100 : 2.0) was used. Subsequently, the glove was dwelled for about 3 seconds in a bath containing a rubber compound liquid of the first layer given in Table 2 and then was picked up from the bath, immediately followed by dipping into a 15% aqueous calcium nitrate solution. Furthermore, the hand mold with the rubber-coated was dried for 3 minutes in a dryer of 75°C, so that a chloroprene-based rubber layer as the first layer was formed.

**Table 2**

| Rubber compound liquid of the first layer | | Parts by weight (solid content basis) |
|---|---|---|
| Chloroprene rubber latex | SHOPRENE 671 A | 100 |
| Surfactant | DARVAN WAQ | 1 |
| Surfactant | DARVAN SMO | 1 |
| pH adjuster | potassium hydroxide | 0.18 |
| Filler | clay | 10 |
| Vulcanizing agent | sulfur | 1 |
| Metal oxide | zinc oxide | 10 |
| Vulcanization accelerator | NOCCELER BZ | 2 |
| Antiaging agent | Vulkanox BKF | 2 |
| Inorganic filler | titanium oxide | 0.4 |
| Pigment | CHROMOFINE BLUE HS-4 | 1 |
| Defoaming agent | Nopco DF-122-NS | 0.05 |
| Thickener | A-7075 | 0.42 |
| | water | 5.4 |
| Concentration of the solid content | | 50% by weight |
| V6 viscosity | | 3000mPa • sec |

Subsequently, the aforementioned hand mold was dipped for 3 seconds in a bath containing a mixed rubber compound liquid of the second layer given in Table 3 and then was picked up from the bath, followed by cure. The cure was performed by heating at 75°C for 60 minutes and then heating at 140°C for 30 minutes. Thus, a mixed rubber layer as the second layer was formed. Then, the coated glove was removed from the hand mold, washed with water and dried, so that a chemical resistant glove in which the chloroprene-based rubber layer as the first layer and the mixed rubber layer as the second layer formed on a fabric glove was obtained.

**Table 3**

| Mixed rubber compound liquid of the second layer | | Parts by weight (solid content basis) |
|---|---|---|
| NBR latex | PERBUNAN N LATEX X 1150 | 10 |
| Chloroprene rubber latex | SHOPRENE 671A | 90 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| Pigment | CHROMOFINE BLUE HS-4 | 0.5 |
| Defoaming agent | Nopco DF-122-NS | 0.05 |
| Thickener | A-7075 | 1 |
| | water | 53.6 |
| Concentration of the solid content | | 35% by weight |
| V6 viscosity | | 2000mPa·sec |

### Example 2

A chemical resistant glove in which a chloroprene-based rubber layer as the first layer and a mixed rubber layer as the second layer had been formed on a fabric glove was obtained in the same way as in Example 1 except for changing the mixed rubber compound liquid of the second layer to the mixed rubber compound liquid shown in Table 4.

**Table 4**

| Mixed rubber compound liquid of the second layer | | Parts by weight (solid content basis) |
|---|---|---|
| NBR latex | PERBUNAN N LATEX X 1150 | 20 |
| Chloroprene rubber latex | SHOPRENE 671A | 80 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| Pigment | CHROMOFINE BLUE HS-4 | 0.5 |
| Defoaming agent | Nopco DF-122-NS | 0.05 |
| Thickener | A-7075 | 1 |
| | water | 48.1 |
| Concentration of the solid content | | 35% by weight |
| V6 viscosity | | 2000mPa·sec |

### Example 3

A chemical resistant glove in which a chloroprene-based rubber layer as the first layer and a mixed rubber layer as the second layer had been formed on a fabric glove was obtained in the same way as in Example 1 except for changing the mixed rubber compound liquid of the second layer to the mixed rubber compound liquid shown in Table 5.

**Table 5**

| Mixed rubber compound liquid of the second layer | | Parts by weight (solid content basis) |
|---|---|---|
| NBR latex | PERBUNAN N LATEX X 1150 | 25 |
| Chloroprene rubber latex | SHOPRENE 671A | 75 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| Pigment | CHROMOFINE BLUE HS-4 | 0.5 |
| Defoaming agent | Nopco DF-122-NS | 0.05 |
| Thickener | A-7075 | 1 |
| | water | 45.3 |
| Concentration of the solid content | | 35% by weight |
| V6 viscosity | | 2000mPa·sec |

### Example 4

A chemical resistant glove in which a chloroprene-based rubber layer as the first layer and a mixed rubber layer as the second layer had been formed on a fabric glove was obtained in the same way as in Example 1 except for changing the mixed rubber compound liquid of the second layer to the mixed rubber compound liquid shown in Table 6.

**Table 6**

| Mixed rubber compound liquid of the second layer | | Parts by weight (solid content basis) |
|---|---|---|
| NBR latex | PERBUNAN N LATEX X 1150 | 40 |
| Chloroprene rubber latex | SHOPRENE 671 A | 60 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| Pigment | CHROMOFINE BLUE HS-4 | 0.5 |
| Defoaming agent | Nopco DF-122-NS | 0.05 |
| Thickener | A-7075 | 1 |
| | water | 36.9 |
| Concentration of the solid content | | 35% by weight |
| V6 viscosity | | 2000mPa·sec |

### Example 5

A chemical resistant glove in which a chloroprene-based rubber layer as the first layer and a mixed rubber layer as the second layer had been formed on a fabric glove was obtained in the same way as in Example 1 except for changing the mixed rubber compound liquid of the second layer to the mixed rubber compound liquid shown in Table 7.

**Table 7**

| Mixed rubber compound liquid of the second layer | | Parts by weight (solid content basis) |
|---|---|---|
| NBR latex | PERBUNAN N LATEX X 1150 | 50 |
| Chloroprene rubber latex | SHOPRENE 671 A | 50 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| Pigment | CHROMOFINE BLUE HS-4 | 0.5 |
| Defoaming agent | Nopco DF-122-NS | 0.05 |
| Thickener | A-7075 | 1 |
| | water | 31.4 |
| Concentration of the solid content | | 35% by weight |
| V6 viscosity | | 2000mPa·sec |

### Example 6

A chemical resistant glove in which a chloroprene-based rubber layer as the first layer and a mixed rubber layer as the second layer had been formed on a fabric glove was obtained in the same way as in Example 1 except for changing the mixed rubber compound liquid of the second layer to the mixed rubber compound liquid shown in Table 8.

**Table 8**

| Mixed rubber compound liquid of the second layer | | Parts by weight (solid content basis) |
|---|---|---|
| NBR latex | PERBUNAN N LATEX X 1150 | 60 |
| Chloroprene rubber latex | SHOPRENE 671 A | 40 |
| Surfactant | DARVAN WAQ | 1 |
| Surfactant | DARVAN SMO | 1 |
| pH adjuster | potassium hydroxide | 1.3 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| Pigment | CHROMOFINE BLUE HS-4 | 0.5 |
| Defoaming agent | Nopco DF-122-NS | 0.05 |
| Thickener | A-7075 | 0.7 |
| | water | 36.4 |
| Concentration of the solid content | | 35% by weight |
| V6 viscosity | | 2000mPa·sec |

### Comparative Example 1

A chemical resistant glove in which a chloroprene-based rubber layer as the first layer had been formed on a fabric glove was obtained in the same way as in Example 1 except for not being dipped in a bath containing a mixed rubber compound liquid of the second layer, the cure, and heating after forming a chloroprene-based rubber layer as the first layer.

### Comparative Example 2

A chemical resistant glove in which a chloroprene-based rubber layer as the first layer and a chloroprene-based rubber layer as the second layer had been formed on a fabric glove was obtained in the same way as in Example 1 except for changing the mixed rubber compound liquid of the second layer to the chloroprene-based rubber compound liquid shown in Table 9.

**Table 9**

| Rubber compound liquid of the second layer | | Parts by weight (solid content basis) |
|---|---|---|
| Chloroprene rubber latex | SHOPRENE 671 A | 100 |
| Surfactant | DARVAN WAQ | 1 |
| Surfactant | DARVAN SMO | 1 |
| pH adjuster | potassium hydroxide | 0.6 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| Pigment | CHROMOFINE BLUE HS-4 | 0.5 |
| Defoaming agent | Nopco DF-122-NS | 0.05 |
| Thickener | A-7075 | 1 |
| | water | 66 |
| Concentration of the solid content | | 35% by weight |
| V6 viscosity | | 2000mPa·sec |

### Comparative Example 3

A chemical resistant glove in which a chloroprene-based rubber layer as the first layer and a mixed rubber layer as the second layer had been formed on a fabric glove was obtained in the same way as in Example 1 except for changing the mixed rubber compound liquid of the second layer to the mixed rubber compound liquid shown in Table 10.

**Table 10**

| Mixed rubber compound liquid of the second layer | | Parts by weight (solid content basis) |
|---|---|---|
| NBR latex | PERBUNAN N LATEX X 1150 | 5 |
| Chloroprene rubber latex | SHOPRENE 671A | 95 |
| Surfactant | DARVAN WAQ | 1 |
| Surfactant | DARVAN SMO | 1 |
| pH adjuster | potassium hydroxide | 0.6 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| Pigment | CHROMOFINE BLUE HS-4 | 0.5 |
| Defoaming agent | Nopco DF-122-NS | 0.05 |
| Thickener | A-7075 | 1 |
| | water | 63.2 |
| Concentration of the solid content | | 35% by weight |
| V6 viscosity | | 2000mPa·sec |

### Comparative Example 4

A chemical resistant glove in which a chloroprene-based rubber layer as the first layer and a mixed rubber layer as the second layer had been formed on a fabric glove was obtained in the same way as in Example 1 except for changing the mixed rubber compound liquid of the second layer to the mixed rubber compound liquid shown in Table 11.

**Table 11**

| Mixed rubber compound liquid of the second layer | | Parts by weight (solid content basis) |
|---|---|---|
| NBR latex | PERBUNAN N LATEX X 1150 | 70 |
| Chloroprene rubber latex | SHOPRENE 671 A | 30 |
| Surfactant | DARVAN WAQ | 1 |
| Surfactant | DARVAN SMO | 1 |
| pH adjuster | potassium hydroxide | 0.97 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| Pigment | CHROMOFINE BLUE HS-4 | 0.5 |
| Defoaming agent | Nopco DF-122-NS | 0.05 |
| Thickener | A-7075 | 0.63 |
| | water | 39.8 |
| Concentration of the solid content | | 35% by weight |
| V6 viscosity | | 2000mPa·sec |

### Comparative Example 5

A chemical resistant glove in which a chloroprene-based rubber layer as the first layer and a mixed rubber layer as the second layer had been formed on a fabric glove was obtained in the same way as in Example 3 except for replacing the NBR latex "PERBUNAN (registered trademark) N LATEX X 1150" in the mixed rubber compound liquid of the second layer given in Table 5 with an SBR latex "Nipol (registered trademark) Lx470A

### Example 7

A chloroprene-based rubber layer as the first layer was formed in the same way as in Example 1 by mounting a fabric glove on a ceramic hand mold, performing a coagulant treatment, dipping the hand mold with the glove into a bath containing a rubber compound liquid of the first layer given in Table 2, picking up the hand mold with the glove, and performing a drying treatment. Subsequently, a chloroprene-based rubber layer as the intermediate layer was formed by dipping the hand mold with the glove into a bath containing a rubber compound liquid of the intermediate layer given in Table 12, followed by picking-up and a drying treatment in the same way as those for the first layer. Subsequently, the hand mold with the glove was dipped in a bath containing a mixed rubber compound liquid of the second layer given in Table 3, followed by picking-up and cure in the same way as in Example 1. Thus, a chemical resistant glove in which the chloroprene-based rubber layer as the first layer, the chloroprene-based rubber layer as the intermediate layer, and the mixed rubber layer as the second layer had been formed on a fabric glove was obtained.

**Table 12**

| Rubber compound liquid of the intermediate layer | | Parts by weight (solid content basis) |
|---|---|---|
| Chloroprene rubber latex | SHOPRENE 671 A | 100 |
| Surfactant | DARVAN WAQ | 1 |
| Surfactant | DARVAN SMO | 1 |
| pH adjuster | potassium hydroxide | 0.12 |
| Filler | clay | 10 |
| Vulcanizing agent | sulfur | 1 |
| Metal oxide | zinc oxide | 10 |
| Vulcanization accelerator | NOCCELER BZ | 2 |
| Antiaging agent | Vulkanox BKF | 2 |
| Inorganic filler | titanium oxide | 0.4 |
| Pigment | CHROMOFINE BLUE HS-4 | 1 |
| Defoaming agent | Nopco DF-122-NS | 0.05 |
| Thickener | A-7075 | 0.28 |
| | water | 12.1 |
| Concentration of the solid content | | 50% by weight |
| viscosity | | 2000mPa·sec |

### Example 8

A chemical resistant glove in which a chloroprene-based rubber layer as the first layer, a chloroprene-based rubber layer as the intermediate layer and a mixed rubber layer as the second layer had been formed on a fabric glove was obtained in the same way as in Example 7 except for changing the mixed rubber compound liquid of the second layer to the mixed rubber compound liquid of the second layer shown in Table 4.

### Example 9

A chemical resistant glove in which a chloroprene-based rubber layer as the first layer, a chloroprene-based rubber layer as the intermediate layer and a mixed rubber layer as the second layer had been formed on a fabric glove was obtained in the same way r as in Example 7 except for changing the mixed rubber compound liquid of the second layer to the mixed rubber compound liquid of the second layer shown in Table 5.

### Example 10

A chemical resistant glove in which a chloroprene-based rubber layer as the first layer, a chloroprene-based rubber layer as the intermediate layer and a mixed rubber layer as the second layer had been formed on a fabric glove was obtained in the same way as in Example 7 except for changing the mixed rubber compound liquid of the second layer to the mixed rubber compound liquid of the second layer shown in Table 6.

### Example 11

A chemical resistant glove in which a chloroprene-based rubber layer as the first layer, a chloroprene-based rubber layer as the intermediate layer and a mixed rubber layer as the second layer had been formed on a fabric glove was obtained in the same way as in Example 7 except for changing the mixed rubber compound liquid of the second layer to the mixed rubber compound liquid of the second layer shown in Table 7.

### Comparative Example 6

A chloroprene-based rubber layer as the first layer was formed in the same way as in Example 1 by setting a fabric glove on a ceramic hand mold, performing a coagulant treatment, dipping the hand mold with the glove into a bath containing a rubber compound liquid of the first layer given in Table 2, picking up the hand mold with the glove, and performing a drying treatment. Subsequently, the hand mold with the glove was dipped into a bath containing a rubber compound liquid of the intermediate layer given in Table 12, followed by picking-up and drying treatment. Thus, a chemical resistant glove in which chloroprene-based rubber layers as the first layer and the intermediate layer had been formed on a fabric glove was obtained.

### Comparative Example 7

A chemical resistant glove in which a chloroprene-based rubber layer as the first layer, a chloroprene-based rubber layer as the intermediate layer and a chloroprene-based rubber layer as the second layer had been formed on a fabric glove was obtained in the same way as in Example 7 except for changing the mixed rubber compound liquid of the second layer to the rubber compound liquid shown in Table 9.

### Comparative Example 8

A chemical resistant glove in which a chloroprene-based rubber layer as the first layer, a chloroprene-based rubber layer as the intermediate layer and a mixed rubber layer as the second layer had been formed on a fabric glove was obtained in the same way as in Example 7 except for changing the mixed rubber compound liquid of the second layer to the mixed rubber compound liquid shown in Table 10.

### Comparative Example 9

A chemical resistant glove in which a chloroprene-based rubber layer as the first layer, a chloroprene-based rubber layer as the intermediate layer and a mixed rubber layer as the second layer had been formed on a fabric glove was obtained in the same way as in Example 7 except for changing the mixed rubber compound liquid of the second layer to the mixed rubber compound liquid shown in Table 11.

### Comparative Example 10

A chemical resistant glove in which a chloroprene-based rubber layer as the first layer, a chloroprene-based rubber layer as the intermediate layer and a mixed rubber layer as the second layer had been formed on a fabric glove was obtained in the same way as in Example 9 except for replacing the NBR latex "PERBUNAN (registered trademark) N LATEX X 1150" in the mixed rubber compound liquid of the second layer given in Table 5 with an SBR latex "Nipol (registered trademark) Lx470A."

### Example 12

A cotton-polyester (50 : 50) mixed-spun seamless glove knitted with a 18-gauge knitter was set on a ceramic hand mold, followed by dipping into a coagulant bath. A coagulant liquid composed of methanol and calcium nitrate (100 : 2.0) was used. Subsequently, the glove was dipped for about 3 seconds in a bath of a rubber compound liquid of the first layer given in Table 2 and then was picked up from the bath, immediately followed by dipping into a 15% aqueous calcium nitrate solution. Furthermore, the hand mold with the rubber-coated glove set thereon was dried for 3 minutes in a dryer of 75°C, so that a chloroprene-based rubber layer as the first layer was formed.

Subsequently, the hand mold with the aforementioned first layer-coated glove mounted thereon was dipped for 3 seconds in a hath of a mixed rubber compound liquid containing NBR particles of the second layer given in Table 13 and then was picked up from the bath, followed by cure. The cure was performed by heating at 75°C for 60 minutes and then heating at 140°C for 30 minutes. Thus, a mixed rubber layer as the second layer was formed. Then, the coated glove was removed from the hand mold, washed with water and dried, so that a chemical resistant glove in which the chloroprene-based rubber layer as the first layer and the mixed rubber layer containing NBR particles as the second layer formed on a fabric glove was obtained.

**Table 13**

| Mixed rubber compound liquid of the second layer | | Parts by weight (solid content basis) |
|---|---|---|
| NBR latex | PERBUNAN N LATEX X 1150 | 10 |
| Chloroprene rubber latex | SHOPRENE 671A | 90 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| NBR particles | BAYMOD N XL 32.12 | 40 |
| Pigment | CHROMOFINE BLUE HS-4 | 0.5 |
| Defoaming agent | Nopco DF-122-NS | 0.05 |
| Thickener | A-7075 | 1 |
| | water | 127.9 |
| Concentration of the solid content | | 35% by weight |
| V6 viscosity | | 2000mPa·sec |

### Example 13

A chemical resistant glove in which a chloroprene-based rubber layer as the first layer and a mixed rubber layer containing NBR particles as the second layer had been formed on a fabric glove was obtained in the same way as in Example 12 except for changing the mixed rubber compound liquid of the second layer to the mixed rubber compound liquid shown in Table 14.

**Table 14**

| Mixed rubber compound liquid of the second layer | | Parts by weight (solid content basis) |
|---|---|---|
| NBR latex | PERBUNAN N LATEX X 1150 | 20 |
| Chloroprene rubber latex | SHOPRENE 671 A | 80 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| NBR particles | BAYMOD N XL 32.12 | 40 |
| Pigment | CHROMOFINE BLUE HS-4 | 0.5 |
| Defoaming agent | Nopco DF-122-NS | 0.05 |
| Thickener | A-7075 | 1 |
| | water | 122.3 |
| Concentration of the solid content | | 35% by weight |
| V6 viscosity | | 2000mPa·sec |

### Example 14

A chemical resistant glove in which a chloroprene-based rubber layer as the first layer and a mixed rubber layer containing NBR particles as the second layer had been formed on a fabric glove was obtained in the same way as in Example 12 except for changing the mixed rubber compound liquid of the second layer to the mixed rubber compound liquid shown in Table 15.

**Table 15**

| Mixed rubber compound liquid of the second layer | | Parts by weight (solid content basis) |
|---|---|---|
| NBR latex | PERBUNAN N LATEX X 1150 | 25 |
| Chloroprene rubber latex | SHOPRENE 671A | 75 |
| Surfactant | DARVANWAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| NBR particles | BAYMOD N XL 32.12 | 40 |
| Pigment | CHROMOFINE BLUE HS-4 | 0.5 |
| Defoaming agent | Nopco DF-122-NS | 0.05 |
| Thickener | A-7075 | 1 |
| | water | 119.5 |
| Concentration of the solid content | | 35% by weight |
| V6 viscosity | | 2000mPa·sec |

### Example 15

A chemical resistant glove in which a chloroprene-based rubber layer as the first layer and a mixed rubber layer containing NBR particles as the second layer had been formed on a fabric glove was obtained in the same way as in Example 12 except for changing the mixed rubber compound liquid of the second layer to the mixed rubber compound liquid shown in Table 16.

**Table 16**

| Mixed rubber compound liquid of the second layer | | Parts by weight (solid content basis) |
|---|---|---|
| NBR latex | PERBUNAN N LATEX X 1150 | 40 |
| Chloroprene rubber latex | SHOPRENE 671A | 60 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| NBR particles | BAYMOD N XL 32.12 | 40 |
| Pigment | CHROMOFINE BLUE HS-4 | 0.5 |
| Defoaming agent | Nopco DF-122-NS | 0.05 |
| Thickener | A-7075 | 1 |
| | water | 111.2 |
| Concentration of the solid content | | 35% by weight |
| V6 viscosity | | 2000mPa·sec |

### Example 16

A chemical resistant glove in which a chloroprene-based rubber layer as the first layer and a mixed rubber layer containing NBR particles as the second layer had been formed on a fabric glove was obtained in the same way as in Example 12 except for changing the mixed rubber compound liquid of the second layer to the mixed rubber compound liquid shown in Table 17.

**Table 17**

| Mixed rubber compound liquid of the second layer | | Parts by weight (solid content basis) |
|---|---|---|
| NBR latex | PERBUNAN N LATEX X 1150 | 50 |
| Chloroprene rubber latex | SHOPRENE 671 A | 50 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| NBR particles | BAYMOD N XL 32.12 | 40 |
| Pigment | CHROMOFINE BLUE HS-4 | 0.5 |
| Defoaming agent | Nopco DF-122-NS | 0.05 |
| Thickener | A-7075 | 1 |
| | water | 105.7 |
| Concentration of the solid content | | 35% by weight |
| V6 viscosity | | 2000mPa·sec |

### Example 17

A chemical resistant glove in which a chloroprene-based rubber layer as the first layer and a mixed rubber layer containing NBR particles as the second layer had been formed on a fabric glove was obtained in the same way as in Example 12 except for changing the mixed rubber compound liquid of the second layer to the mixed rubber compound liquid shown in Table 18.

**Table 18**

| Mixed rubber compound liquid of the second layer | | Parts by weight (solid content basis) |
|---|---|---|
| NBR latex | PERBUNAN N LATEX X 1150 | 60 |
| Chloroprene rubber latex | SHOPRENE 671A | 40 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| NBR particles | BAYMOD N XL 32.12 | 40 |
| Pigment | CHROMOFINE BLUE HS-4 | 0.5 |
| Defoaming agent | Nopco DF-122-NS | 0.05 |
| Thickener | A-7075 | 1 |
| | water | 100.1 |
| Concentration of the solid content | | 35% by weight |
| V6 viscosity | | 2000mPa·sec |

### Example 18

A chemical resistant glove in which a chloroprene-based rubber layer as the first layer and a mixed rubber layer containing NBR particles as the second layer had been formed on a fabric glove was obtained in the same way as in Example 12 except for changing the mixed rubber compound liquid of the second layer to the mixed rubber compound liquid shown in Table 19.

**Table 19**

| Mixed rubber compound liquid of the second layer | | Parts by weight (solid content basis) |
|---|---|---|
| NBR latex | PERBUNAN N LATEX X 1150 | 25 |
| Chloroprene rubber latex | SHOPRENE 671 A | 75 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| NBR particles | BAYMOD N XL 32.12 | 20 |
| Pigment | CHROMOFINE BLUE HS-4 | 0.5 |
| Defoaming agent | Nopco DF-122-NS | 0.05 |
| Thickener | A-7075 | 1 |
| | water | 82.4 |
| Concentration of the solid content | | 35% by weight |
| V6 viscosity | | 2000mPa·sec |

### Example 19

A chemical resistant glove in which a chloroprene-based rubber layer as the first layer and a mixed rubber layer containing NBR particles as the second layer had been formed on a fabric glove was obtained in the same way as in Example 12 except for changing the mixed rubber compound liquid of the second layer to the mixed rubber compound liquid shown in Table 20.

**Table 20**

| Mixed rubber compound liquid of the second layer | | Parts by weight (solid content basis) |
|---|---|---|
| NBR latex | PERBUNAN N LATEX X 1150 | 25 |
| Chloroprene rubber latex | SHOPRENE 671 A | 75 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| NBR particles | BAYMOD N XL 32.12 | 60 |
| Pigment | CHROMOFINE BLUE HS-4 | 0.5 |
| Defoaming agent | Nopco DF-122-NS | 0.05 |
| Thickener | A-7075 | 1 |
| | water | 156.7 |
| Concentration of the solid content | | 35% by weight |
| V6 viscosity | | 2000mPa·sec |

### Comparative Example 11

A chemical resistant glove in which a chloroprene-based rubber layer as the first layer and a chloroprene-based rubber layer containing NBR particles as the second layer had been formed on a fabric glove was obtained in the same way as in Example 12 except for changing the mixed rubber compound liquid of the second layer to the chloroprene-based rubber compound liquid shown in Table 21.

**Table 21**

| Rubber compound liquid of the second layer | | Parts by weight (solid content basis) |
|---|---|---|
| Chloroprene rubber latex | SHOPRENE 671 A | 100 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| NBR particles | BAYMOD N XL 32.12 | 40 |
| Pigment | CHROMOFINE BLUE HS-4 | 0.5 |
| Defoaming agent | Nopco DF-122-NS | 0.05 |
| Thickener | A-7075 | 1 |
| | water | 133.4 |
| Concentration of the solid content | | 35% by weight |
| V6 viscosity | | 2000mPa·sec |

### Comparative Example 12

A chemical resistant glove in which a chloroprene-based rubber layer as the first layer and a mixed rubber layer containing NBR particles as the second layer had been formed on a fabric glove was obtained in the same way as in Example 12 except for changing the mixed rubber compound liquid of the second layer to the mixed rubber compound liquid shown in Table 22.

**Table 22**

| Mixed rubber compound liquid of the second layer | | Parts by weight (solid content basis) |
|---|---|---|
| NBR latex | PERBUNAN N LATEX X 1150 | 25 |
| Chloroprene rubber latex | SHOPRENE 671 A | 75 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| NBR particles | BAYMOD N XL 32.12 | 15 |
| Pigment | CHROMOFINE BLUE HS-4 | 0.5 |
| Defoaming agent | Nopco DF-122-NS | 0.05 |
| Thickener | A-7075 | 1 |
| | water | 87 |
| Concentration of the solid content | | 35% by weight |
| V6 viscosity | | 2000mPa·sec |

### Comparative Example 13

A chemical resistant glove in which a chloroprene-based rubber layer as the first layer and a mixed rubber layer containing NBR particles as the second layer had been formed on a fabric glove was obtained in the same way as in Example 12 except for changing the mixed rubber compound liquid of the second layer to the mixed rubber compound liquid shown in Table 23.

**Table 23**

| Mixed rubber compound liquid of the second layer | | Parts by weight (solid content basis) |
|---|---|---|
| NBR latex | PERBUNAN N LATEX X 1150 | 25 |
| Chloroprene rubber latex | SHOPRENE 671 A | 75 |
| Surfactant | DARVAN WAQ | 1 |
| Surfactant | DARVAN SMO | 1 |
| pH adjuster | potassium hydroxide | 1 |
| Vulcanizing agent | sulfur | 1 |
| Metal oxide | zinc oxide | 5 |
| Vulcanization accelerator | NOCCELER BZ | 1 |
| Antiaging agent | Vulkanox BKF | 2 |
| Inorganic filler | titanium oxide | 0.4 |
| NBR particles | BAYMOD N XL 32.12 | 65 |
| Pigment | CHROMOFINE BLUE HS-4 | 0.5 |
| Defoaming agent | Nopco DF-122-NS | 0.05 |
| Thickener | A-7075 | 1 |
| | water | 179.9 |
| Concentration of the solid content | | 35% by weight |
| V6 viscosity | | 2000mPa·sec |

### Comparative Example 14

A chemical resistant glove in which a chloroprene-based rubber layer as the first layer and a mixed rubber layer containing NBR particles as the second layer had been formed on a fabric glove was obtained in the same way as in Example 12 except for replacing the NBR latex "PERBUNAN N LATEX X 1150" in the mixed rubber compound liquid of the second layer given in Table 15 with an SBR latex "Nipol Lx470A."

### Comparative Example 15

A chemical resistant glove in which a chloroprene-based rubber layer as the first layer and a mixed rubber layer containing CR particles as the second layer had been formed on a fabric glove was obtained in the same way as in Example 14 except for replacing the NBR particles "BAYMOD NXL32.12" in the mixed rubber compound liquid of the second layer given in Table 15 with CR particles.

The CR particles were obtained by kneading the raw materials given in Table 24, press-vulcanizing the resulting sheet at 150°C for 30 minutes, followed by pulverization with a freeze pulverizer. The particle diameter of the CR particles was adjusted with a sieve to be not larger than 700 µm and not smaller than 50 µm.

**Table 24**

| CR particles | | Amount (parts by weight) |
|---|---|---|
| Chloroprene rubber | SKYPRENE 640 | 100 |
| Metal oxide | zinc oxide | 5 |
| Vulcanization accelerator | SANCELER 22-C | 1 |
| Vulcanization supplement accelerator | magnesium oxide | 4 |
| Vlcanization accelerating auxiliary | stearic acid | 1 |
| Filler | clay | 30 |
| Mineral oil type softener | naphthene type process oil | 10 |

### Comparative Example 16

A chemical resistant glove in which a chloroprene-based rubber layer as the first layer and a mixed rubber layer containing SBR particles as the second layer had been formed on a fabric glove was obtained in the same way as in Example 14 except for replacing the NBR particles "BAYMOD NXL32.12" in the mixed rubber compound liquid of the second layer given in Table 15 with SBR particles.

The SBR particles were obtained by kneading the raw materials given in Table 25, press-vulcanizing the resulting sheet at 150°C for 30 minutes, followed by pulverization with a freeze pulverizer. The particle diameter of the SBR particles was adjusted with a sieve to be not larger than 700 µm and not smaller than 50 µm.

**Table 25**

| SBR particles | | Amount (parts by weight) |
|---|---|---|
| Styrene-butadiene rubber | Nipol 1502 | 100 |
| Vulcanizing agent | sulfur | 2 |
| Metal oxide | zinc oxide | 5 |
| Vulcanization accelerator | NOCCELER BZ | 2 |
| Vulcanization | acceleration auxiliary stearic acid | 1.5 |
| Filler | titanium oxide | 10 |

### Example 20

A chloroprene-based rubber layer as the first layer was formed in the same way as in Example 12 by mounting a fabric glove on a ceramic hand mold, performing a coagulant treatment, dipping the hand mold with the glove into a bath of a rubber compound liquid of the first layer given in Table 2, picking up the hand mold with the glove, and performing a drying treatment. Subsequently, a chloroprene-based rubber layer as the intermediate layer was formed by dipping the hand mold with the glove into a bath of a rubber compound liquid of the intermediate layer given in Table 12, followed by picking-up and a drying treatment in the same way as those for the first layer. Subsequently, the hand mold with the glove was dipped in a bath of a mixed rubber compound liquid containing NBR particles of the second layer given in Table 13, followed by picking-up and cure in the same way as in Example 12. Thus, a chemical resistant glove in which the chloroprene-based rubber layer as the first layer, the chloroprene-based rubber layer as the intermediate layer, and the mixed rubber layer containing NBR particles as the second layer had been formed on a fabric glove was obtained.

### Example 21

A chemical resistant glove in which a chloroprene-based rubber layer as the first layer, a chloroprene-based rubber layer as the intermediate layer and a mixed rubber layer containing NBR particles as the second layer had been formed on a fabric glove was obtained in the same way as in Example 20 except for changing the mixed rubber compound liquid of the second layer to the mixed rubber compound liquid of the second layer shown in Table 14.

### Example 22

A chemical resistant glove in which a chloroprene-based rubber layer as the first layer, a chloroprene-based rubber layer as the intermediate layer and a mixed rubber layer containing NBR particles as the second layer had been formed on a fabric glove was obtained in the same way as in Example 20 except for changing the mixed rubber compound liquid of the second layer to the mixed rubber compound liquid of the second layer shown in Table 15.

### Example 23

A chemical resistant glove in which a chloroprene-based rubber layer as the first layer, a chloroprene-based rubber layer as the intermediate layer and a mixed rubber layer containing NBR particles as the second layer had been formed on a fabric glove was obtained in the same way as in Example 20 except for changing the mixed rubber compound liquid of the second layer to the mixed rubber compound liquid of the second layer shown in Table 16.

### Example 24

A chemical resistant glove in which a chloroprene-based rubber layer as the first layer, a chloroprene-based rubber layer as the intermediate layer and a mixed rubber layer containing NBR particles as the second layer had been formed on a fabric glove was obtained in the same way as in Example 20 except for changing the mixed rubber compound liquid of the second layer to the mixed rubber compound liquid of the second layer shown in Table 17.

### Example 25

A chemical resistant glove in which a chloroprene-based rubber layer as the first layer, a chloroprene-based rubber layer as the intermediate layer and a mixed rubber layer containing NBR particles as the second layer had been formed on a fabric glove was obtained in the same way as in Example 20 except for changing the mixed rubber compound liquid of the second layer to the mixed rubber compound liquid of the second layer shown in Table 18.

### Example 26

A chemical resistant glove in which a chloroprene-based rubber layer as the first layer, a chloroprene-based rubber layer as the intermediate layer and a mixed rubber layer containing NBR particles as the second layer had been formed on a fabric glove was obtained in the same way as in Example 20 except for changing the mixed rubber compound liquid of the second layer to the mixed rubber compound liquid of the second layer shown in Table 19.

### Example 27

A chemical resistant glove in which a chloroprene-based rubber layer as the first layer, a chloroprene-based rubber layer as the intermediate layer and a mixed rubber layer containing NBR particles as the second layer had been formed on a fabric glove was obtained in the same way as in Example 20 except for changing the mixed rubber compound liquid of the second layer to the mixed rubber compound liquid of the second layer shown in Table 20.

### Comparative Example 17

A chtoroprene-based rubber layer as the first layer was formed in the same way as in Example 20 by mounting a fabric glove on a ceramic hand mold, performing a coagulant treatment, dipping the hand mold with the glove into a bath of a rubber compound liquid of the first layer given in Table 2, picking up the hand mold with the glove, and performing a drying treatment. Subsequently, the hand mold with the glove was dipped into a bath of a rubber compound liquid of the intermediate layer given in Table 12, followed by picking-up and drying treatment. Furthermore, the hand mold with the glove was dipped in a bath of a rubber compound liquid containing NBR particles of the second layer given in Table 21 and then was picked up, followed by operations the same as those performed in Example 20. Thus, a chemical resistant glove in which a chloroprene-based rubber layer as the first layer, a chloroprene-based layer as the intermediate layer and a chloroprene-based rubber layer containing NBR particles as the second layer had been formed on a fabric glove was obtained.

### Comparative Example 18

A chemical resistant glove in which a chloroprene-based rubber layer as the first layer, a chloroprene-based rubber layer as the intermediate layer and a mixed rubber layer containing NBR particles as the second layer had been formed on a fabric glove was obtained in the same way as in Example 22 except for changing the mixed rubber compound liquid of the second layer to the mixed rubber compound liquid shown in Table 22.

### Comparative Example 19

A chemical resistant glove in which a chloroprene-based rubber layer as the first layer, a chloroprene-based rubber layer as the intermediate layer and a mixed rubber layer containing NBR particles as the second layer had been formed on a fabric glove was obtained in the same way as in Example 22 except for changing the mixed rubber compound liquid of the second layer to the mixed rubber compound liquid shown in Table 23.

### Comparative Example 20

A chemical resistant glove in which a chloroprene-based rubber layer as the first layer, a chloroprene-based rubber layer as the intermediate layer and a mixed rubber layer containing NBR particles as the second layer had been formed on a fabric glove was obtained in the same way as in Example 22 except for replacing the NBR latex "PERB-UNAN N LATEX X 1150" in the mixed rubber compound liquid of the second layer given in Table 15 with an SBR latex "Nipol Lx470A."

### Comparative Example 21

A chemical resistant glove in which a chloroprene-based rubber layer as the first layer, a chloroprene-based rubber layer as the intermediate layer and a mixed rubber layer containing CR particles as the second layer had been formed on a fabric glove was obtained in the same way as in Example 22 except for replacing the NBR particles "BAYMOD NXL32.12" in the mixed rubber compound liquid of the second layer given in Table 15 with CR particles.

The CR particles were obtained by kneading the raw materials given in Table 24, press-vulcanizing the resulting sheet at 150°C for 30 minutes, followed by pulverization with a freeze pulverizer. The particle diameter of the CR particles was adjusted with a screen to be not larger than 700 µm and not smaller than 50 µm.

### Comparative Example 22

A chemical resistant glove in which a chloroprene-based rubber layer as the first layer, a chloroprcne-based rubber layer as the intermediate layer and a mixed rubber layer containing SBR particles as the second layer had been formed on a fabric glove was obtained in the same way as in Example 22 except for replacing the NBR particles "BAYMOD NXL32.12" in the mixed rubber compound liquid of the second layer given in Table 15 with SBR particles.

The SBR particles were obtained by kneading the raw materials given in Table 25, press-vulcanizing the resulting sheet at 150°C for 30 minutes, followed by pulverization with a freeze pulverizer. The particle diameter of the SBR particles was adjusted with a screen to be not larger than 700 µm and not smaller than 50 µm.

For the chemical resistant gloves obtained in Examples 1 to 11 and Comparative Examples 1 to 10, a chemical resistance test according to ISO 6529 was performed and the breakthrough time (min) was measured. Moreover, tactile feeling, abrasion resistance were evaluated by the methods described below. The results are shown in Tables 26 and 27.

For the chemical resistant gloves obtained in Examples 12 to 27 and Comparative Examples 11 to 22, a chemical resistance test according to ISO 6529 was performed and the breakthrough time (min) was measured. Moreover, tactile feeling, abrasion resistance, slip resistance and drop-off of particles were evaluated by the methods described below. The results are shown in Tables 28 and 29.

In Tables 26 to 29, CR represents a chloroprene-based rubber, NBR represents a nitrile-butadiene-based rubber, and SBR represents a styrene-butadiene-based rubber.

### "Tactile feeling"

Ten subjects wore the gloves of Examples 1 to 27 and the gloves of Comparative Examples 1 to 22 and evaluated the tactile feeling according to the following criteria.
A: The gloves feel soft.
B: The gloves feel a little stiff but soft.
C: The gloves feel stiff and are hard.

### "Abrasion resistance"

The gloves of Examples 1 to 27 and the gloves of Comparative Examples 1 to 22 were subjected to an abrasion resistance test according to EN388 and the abrasion strength was evaluated according to the following criteria. Generally, a glove with a time of withstanding abrasions of less than 500 is judged to be unsuitable for a protective glove such as a chemical resistant glove.
A: 1001 times or more.
B: Not less than 501 times and less than 1000 times.
C: Less than 500 times.

### "Slip resistance"

Ten subjects wore the gloves of Examples 12 to 27 and the gloves of Comparative Examples 11 to 22 and sensorily evaluated, according to the criteria given below, the slip resisting effect exhibited against glass as a working object under dry conditions and under wet conditions produced with water.
A: A sufficient slip-resisting effect is observed under both dry conditions and wet conditions.
B: A sufficient slip-resisting effect is observed under dry conditions and a slip-resisting effect that is slightly weak but has no practical problem is observed under wet conditions.
C: The slip-resisting effect is low under both dry conditions and wet conditions.

### "Drop-off of particles"

The gloves of Examples 12 to 27 and the gloves of Comparative Examples 11 to 22 were subjected to a abrasion resistance test according to EN388 and were evaluated according to the following criteria.
A: Drop-off of particles from the glove was not observed even at 51 or more abrasions.
C: Drop-off of particles from the glove was observed at 50 or less abrasions.

**Table 26**

| | Coating layers of the chemical resistant glove | | | | Chemical resistance (min) | | | | | Tactile feeling | Abrasion resistance | Total thickness of layers (mm) |
|---|---|---|---|---|---|---|---|---|---|---|---|---|
| | 1st | Intermediate | 2nd | | MEK | Ethyl acetate | Chloroform | Toluene | Methanol | | | |
| Example 1 | CR | - | NBR | 10 | 2.23 | 3.38 | 1.59 | 1.98 | 480 | A | B | 0.35 |
| | | | CR | 90 | | | | | | | | |
| Example 2 | CR | - | NBR | 20 | 1.82 | 2.23 | 1.32 | 2.01 | 480 | A | A | 0.35 |
| | | | CR | 80 | | | | | | | | |
| Example 3 | CR | - | NBR | 25 | 1.64 | 2.01 | 1.28 | 2.54 | 480 | A | A | 0.35 |
| | | | CR | 75 | | | | | | | | |
| Example 4 | CR | - | NBR | 40 | 1.64 | 1.95 | 1.19 | 2.58 | 480 | A | A | 0.35 |
| | | | CR | 60 | | | | | | | | |
| Example 5 | CR | - | NBR | 50 | 1.62 | 1.89 | 1.15 | 2.76 | 480 | B | A | 0.35 |
| | | | CR | 50 | | | | | | | | |
| Example 6 | CR | - | NBR | 60 | 1.6 | 1.86 | 1.12 | 2.98 | 480 | B | A | 0.35 |
| | | | CR | 40 | | | | | | | | |
| Comp. Example 1 | CR | - | - | | 0.46 | 1.37 | 0.46 | 0.82 | 480 | A | C | 0.2 |
| Comp. Example 2 | CR | - | CR | | 2.34 | 3.44 | 1.77 | 1.81 | 480 | A | C | 0.35 |
| Comp. Example 3 | CR | - | CBR | 5 | 2.3 | 3.39 | 1.6 | 1.84 | 480 | A | C | 0.35 |
| | | | CR | 95 | | | | | | | | |
| Comp. Example 4 | CR | - | NBR | 70 | 1.58 | 1.77 | 1.06 | 3.23 | 480 | C | A | 0.35 |
| | | | CR | 30 | | | | | | | | |
| Comp. Example 5 | CR | - | SBR | 25 | 1.82 | 1.85 | 0.99 | 2 | 480 | C | C | 0.35 |
| | | | CR | 75 | | | | | | | | |

**Table 27**

| | Coating layers of the chemical resistant glove | | | | Chemical resistance (min) | | | | | Tactile feeling | Abrasion resistance | Total thickness of layers (mm) |
|---|---|---|---|---|---|---|---|---|---|---|---|---|
| | 1st | Intermediate | 2nd | | MEK | Ethyl acetate | Chloroform | Toluene | Methanol | | | |
| Example 7 | CR | CR | NBR | 10 | 6.79 | 9.39 | 5.64 | 6.01 | 480 | A | B | 0.55 |
| | | | CR | 90 | | | | | | | | |
| Example 8 | CR | CR | NBR | 20 | 6.62 | 8.88 | 5.62 | 6.27 | 480 | A | A | 0.55 |
| | | | CR | 80 | | | | | | | | |
| Example 9 | CR | CR | NBR | 25 | 6.57 | 8.67 | 5.54 | 6.47 | 480 | A | A | 0.55 |
| | | | CR | 75 | | | | | | | | |
| Example 10 | CR | CR | NBR | 40 | 6.43 | 8.73 | 5.32 | 6.78 | 480 | A | A | 0.55 |
| | | | CR | 60 | | | | | | | | |
| Example 11 | CR | CR | NBR | 50 | 6.22 | 8.12 2 | 5.16 6 | 6.99 | 480 | B | A | 0.55 |
| | | | CR | 50 | | | | | | | | |
| Comp. Example 6 | CR | CR | - | | 4.84 | 5.66 | 4.48 | 5.47 | 480 | A | C | 0.4 |
| Comp. Example 7 | CR | CR | CR | | 6.83 | 9.46 | 5.68 | 5.83 | 480 | A | C | 0.55 |
| Comp Example 8 | CR | CR | NBR | 5 | 6.82 | 9.43 | 5.66 | 5.99 | 480 | A | C | 0.55 |
| | | | CR | 95 | | | | | | | | |
| Comp. Example 9 | CR | CR | NBR | 70 | 5.89 | 7.66 | 4.83 | 7.12 | 480 | C | A | 055 |
| | | | CR | 30 | | | | | | | | |
| Comp. Example 10 | CR | CR | SBR | 25 | 7 | 8.34 | 3.67 | 5.16 | 480 | C | B | 0.55 |
| | | | CR | 75 | | | | | | | | |

**Table 28**

| | Coating layers of the chemical resistant glove | | | | | | Chemical resistance (min) | | | | | Tactile feeling | Abrasion resistance | Slip resistance | Drop -off of particles | Total thickness of layers (mm) |
|---|---|---|---|---|---|---|---|---|---|---|---|---|---|---|---|---|
| | 1st | Intermediate | 2nd | | Added particles | | MEK | Ethyl acetate | Chloroform | Toluene | Methanol | | | | | |
| | | | | | Material | Amount | | | | | | | | | | |
| Example 12 | CR | - | NBR | 10 | NBR | 40 | 3.4 | 3.2 | 1.6 | 4.2 | 480 | A | B | A | A | 0.35 |
| | | | CR | 90 | | | | | | | | | | | | |
| Example 13 | CR | - | NBR | 20 | NBR | 40 | 3.0 | 3.1 | 1.6 | 4.2 | 480 | A | A | A | A | 0.35 |
| | | | CR | 80 | | | | | | | | | | | | |
| Example 14 | CR | - | NBR | 25 | NBR | 40 | 2.7 | 2.8 | 1.6 | 4.4 | 480 | A | A | A | A | 0.35 |
| | | | CR | 75 | | | | | | | | | | | | |
| Example 15 | CR | - | NBR | 40 | NBR | 40 | 2.6 | 2.6 | 1.6 | 4.8 | 480 | A | A | A | A | 0.35 |
| | | | CR | 60 | | | | | | | | | | | | |
| Example 16 | CR | - | NBR | 50 | NBR | 40 | 2.4 | 2.6 | 1.5 | 4.9 | 480 | B | A | A | A | 0.35 |
| | | | CR | 50 | | | | | | | | | | | | |
| Example 17 | CR | - | NBR | 60 | NBR | 40 | 2.3 | 2.5 | 1.5 | 5.0 | 480 | B | A | A | A | 0.35 |
| | | | CR | 40 | | | | | | | | | | | | |
| Example 18 | CR | - | NBR | 25 | NBR | 20 | 2.0 | 2.2 | 1.3 | 3.8 | 480 | A | A | B | A | 0.35 |
| | | | NBR | 75 | | | | | | | | | | | | |
| Example 19 | CR | - | NBR | 25 | NBR | 60 | 2.9 | 3.2 | 1.8 | 4.7 | 480 | B | A | A | A | 0.35 |
| | | | CR | 75 | | | | | | | | | | | | |
| Comp. Example 11 | CR | - | CR | | NBR | 40 | 3.6 | 3.4 | 1.6 | 4.0 | 480 | A | C | A | A | 0.35 |
| Comp. Example 12 | CR | - | BR | 25 | NBR | 15 | 2.0 | 2.2 | 1.4 | 3.1 | 480 | A | A | C | A | 0.35 |
| | | | CR | 75 | | | | | | | | | | | | |
| Comp Example 13 | CR | - | NBR | 25 | NBR | 65 | 3.1 | 3.4 | 2.2 | 5.0 | 480 | C | A | A | A | 0.35 |
| | | | CR | 75 | | | | | | | | | | | | |
| Comp. Example 14 | CR | - | SBR | 25 | NBR | 40 | 2.6 | 2.5 | 1.4 | 3.7 | 480 | C | C | A | A | 0.35 |
| | | | CR | 75 | | | | | | | | | | | | |
| Comp. Example 15 | CR | - | NBR | 25 | CR | 40 | 2.7 | 2.7 | 1.6 | 3.6 | 480 | A | A | A | C | 0.35 |
| | | | CR | 75 | | | | | | | | | | | | |
| Comp. Example 16 | CR | - | NBR | 25 | SBR | 40 | 2.3 | 2.5 | 1.5 | 4.2 | 480 | A | A | A | C | 0.35 |
| | | | CR | 75 | | | | | | | | | | | | |

**Table 29**

| | Coating layers of the chemical resistance glove | | | | | | Chemical resistance (min) | | | | | Tactile feeling | Abrasion resistance | Slip resistance | Drop-off of particles | Total thickness of layers (mm) |
|---|---|---|---|---|---|---|---|---|---|---|---|---|---|---|---|---|
| | 1st | Inter- mediate | 2nd | | Added particles | | MEK | Ethyl acetate | Chloroform | Toluene | Tactile Methanol | | | | | |
| | | | | | Material | Amount | | | | | | | | | | |
| Example 20 | CR | CR | NBR | 10 | NBR | 40 | 10.1 | 13.7 | 7.2 | 13.8 | 480 | A | B | A | A | 0.55 |
| | | | CR | 90 | | | | | | | | | | | | |
| Example 21 | CR | OR | NBR | 20 | NBR | 40 | 9.9 | 13.5 | 7.1 | 12.7 | 480 | A | A | A | A | 0.55 |
| | | | CR | 80 | | | | | | | | | | | | |
| Example 22 | CR | CR | NBR | 25 | NBR | 40 | 9.9 | 13.3 | 6.9 | 12.1 | 480 | A | A | A | A | 0.55 |
| | | | CR | 75 | | | | | | | | | | | | |
| Example 23 | CR | CR | NBR | 40 | NBR | 40 | 9.6 | 13.2 | 6.8 | 11.9 | 480 | A | A | A | A | 0.55 |
| | | | CR | 60 | | | | | | | | | | | | |
| Example 24 | CR | CR | NBR | 50 | NBR | 40 | 9.4 | 12.6 | 6.7 | 11.7 | 480 | B | A | A | A | 0.55 |
| | | | CR | 50 | | | | | | | | | | | | |
| Example 25 | CR | CR | NBR | 60 | NBR | 40 | 9.3 | 12.3 | 6.5 | 11.2 | 480 | B | A | A | A | 0.55 |
| | | | CR | 40 | | | | | | | | | | | | |
| Example 26 | CR | CR | NBR | 25 | NBR | 20 | 9.0 | 11.6 | 6.6 | 9.4 | 480 | A | A | B | A | 0.55 |
| | | | CR | 75 | | | | | | | | | | | | |
| Example 27 | CR | CR | NBR | 25 | NBR | 60 | 10.1 | 13.6 | 7.7 | 11.3 | 480 | B | A | A | A | 0.55 |
| | | | CR | 75 | | | | | | | | | | | | |
| Comp. Example 17 | CR | CR | CR | | NBR | 40 | 10.6 | 14.8 | 7.4 | 14.9 | 480 | A | C | A | A | 0.55 |
| Comp. Example 18 | CR | CR | NBR | 25 | NBR | 15 | 7.9 | 9.5 | 6.1 | 8.0 | 480 | A | A | C | A | 0.55 |
| | | | CR | 75 | | | | | | | | | | | | |
| Comp. Example 19 | CR | CR | NBR | 25 | NBR | 65 | 11.0 | 12.0 | 7.6 | 12.6 | 480 | C | A | A | A | 0.55 |
| | | | CR | 75 | | | | | | | | | | | | |
| Comp. Example 20 | CR | CR | SBR | 25 | NBR | 40 | 9.8 | 10.8 | 4.7 | 9.8 | 480 | C | C | A | A | 0.55 |
| | | | CR | 75 | | | | | | | | | | | | |
| Comp. Example 21 | CR | CR | NBR | 25 | CR | 40 | 10.4 | 11.1 | 6.8 | 8.8 | 480 | A | A | A | C | 0.55 |
| | | | CR | 75 | | | | | | | | | | | | |
| Comp. Example 22 | CR | CR | NBR | 25 | SBR | 40 | 9.6 | 13.1 | 6.4 | 11.7 | 480 | A | A | A | C | 0.55 |
| | | | CR | 75 | | | | | | | | | | | | |

As described above, according to the present invention, a glove excellent in chemical resistance and safety and good in tactile feeling and abrasion resistance, the glove being suitable as a protective glove, can be provided by forming a chloroprene-based rubber layer as a first layer and a mixed rubber layer of an NBR-based rubber and a chloroprene-based rubber as a second layer sequentially on a fabric glove.

Moreover, a glove that has more improved chemical resistance can be provided by further forming a chloroprene-based rubber layer as an intermediate layer between the first layer and the second layer.

Furthermore, a glove excellent in chemical resistance and safety and good in tactile feeling and abrasion resistance as well as in slip resistance, the glove being suitable as a protective glove, can be provided by causing the mixed rubber layer to contain NBR-based rubber particles.

## Claims

1. A chemical resistant glove which comprises a chloroprene-based rubber layer as a first layer and a mixed rubber layer containing a nitrile-butadiene-based rubber and a chloroprene-based rubber as a second layer sequentially formed on a fabric glove, wherein the mixing ratio of the nitrile-butadiene-based rubber and the chloroprene-based rubber in the mixed rubber layer as the second layer is 60 : 40 to 10 : 90 in a solid weight ratio.

2. The chemical resistant glove of claim 1, wherein the mixing ratio of the nitrile-butadiene-based rubber and the chloroprene-based rubber in the mixed rubber layer as the second layer is 40 : 60 to 20 : 80 in a solid weight ratio.

3. The chemical resistant glove of claim 1 or 2, wherein a chloroprene-based rubber layer as an intermediate layer is further formed between the chloroprene-based rubber layer as the first layer and the mixed rubber layer containing the nitrile-butadiene-based rubber and the chloroprene-based rubber as the second layer.

4. The chemical resistant glove of any one of claims 1 to 3, wherein nitrile-butadiene-based rubber particles are contained in the mixed rubber layer as the second layer in an amount of 20 to 60 parts by weight, on a solid content basis, based on 100 parts by weight of a latex of the mixed rubber layer as the second layer.

5. The chemical resistant glove of claim 4, wherein the content of the nitrile-butadiene-based rubber particles is 30 to 50 parts by weight, on a solid basis, based on 100 parts by weight of the mixed rubber layer as the second layer.

6. The chemical resistant glove of any one of claims 1 to 5, wherein the thickness of the first layer is in a range of from 0.18 to 0.23 mm.

7. The chemical resistant glove of any one of claims 1 to 6, wherein the thickness of the second layer is in a range of from 0.14 to 0.18 mm.

8. The chemical resistant glove of any one of claims 3 to 7, wherein the thickness of the intermediate layer is in a range of from 0.18 to 0.23 mm.

## Patentansprüche

1. Ein chemikalienechter Handschuh, welcher eine auf Chloropren basierende Kautschukschicht als eine erste Schicht umfasst und eine gemischte Kautschukschicht, enthaltend einen auf Nitril-Butadien basierenden Kautschuk und einen auf Chloropren basierenden Kautschuk, als eine zweite Schicht, aufeinanderfolgend gebildet auf einem Textilhandschuh, wobei das Mischungsverhältnis des auf Nitril-Butadien basierenden Kautschuks und des auf Chloropren basierenden Kautschuks in der gemischten Kautschukschicht als zweite Schicht 60:40 bis 10:90 als Feststoffgewichtsverhältnis beträgt.

2. Der chemikalienechte Handschuh gemäß Anspruch 1, wobei das Mischungsverhältnis des auf Nitril-Butadien basierenden Kautschuks und des auf Chloropren basierenden Kautschuks in der gemischten Kautschukschicht als zweite Schicht 40:60 bis 20:80 als Feststoffgewichtsverhältnis beträgt.

3. Der chemikalienechte Handschuh gemäß Anspruch 1 oder 2, wobei ferner eine auf Chloropren basierende Kautschukschicht als eine Zwischenschicht zwischen der auf Chloropren basierenden Kautschukschicht als erste Schicht und der gemischten Kautschukschicht, enthaltend einen auf Nitril-Butadien basierenden Kautschuk und einen auf Chloropren basierenden Kautschuk, als zweite Schicht gebildet ist.

4. Der chemikalienechte Handschuh gemäß einem der Ansprüche 1 bis 3, wobei die auf Nitril-Butadien basierenden Kautschukpartikel in der gemischten Kautschukschicht als zweite Schicht in einer Menge von 20 bis 60 Gewichtsteilen auf Basis des Feststoffgehalts, bezogen auf 100 Gewichtsteile eines Latex der gemischten Kautschukschicht als zweite Schicht, enthalten sind.

5. Der chemikalienechte Handschuh gemäß Anspruch 4, wobei der Gehalt an auf Nitril-Butadien basierenden Kautschukpartikeln 30 bis 50 Gewichtsteile auf Basis des Feststoffgehalts, bezogen auf 100 Gewichtsteile der gemischten Kautschukschicht als zweite Schicht, ist.

6. Der chemikalienechte Handschuh gemäß einem der Ansprüche 1 bis 5, wobei die Dicke der ersten Schicht in einem Bereich von 0.18 bis 0.23 mm liegt.

7. Der chemikalienechte Handschuh gemäß einem der Ansprüche 1 bis 6, wobei die Dicke der zweiten Schicht in einem Bereich von 0,14 bis 0,18 mm liegt.

8. Der chemikalienechte Handschuh gemäß einem der Ansprüche 3 bis 7, wobei die Dicke der Zwischenschicht in einem Bereich von 0,18 bis 0,23 mm liegt.

## Revendications

1. Gant résistant aux produits chimiques, lequel comprend une couche de caoutchouc à base de chloroprène comme première couche et une couche de caoutchouc mixte contenant un caoutchouc à base de nitrile-butadiène et un caoutchouc à base de chloroprène comme seconde couche successivement formées sur un gant en tissu, dans lequel le rapport de mélange du caoutchouc à base de nitrile-butadiène et du caoutchouc à base de chloroprène dans la couche de caoutchouc mixte en tant que seconde couche est de 60:40 à 10:90 dans un rapport de masse de matière solide.

2. Gant résistant aux produits chimiques selon la revendication 1, dans lequel le rapport de mélange du caoutchouc à base de nitrile-butadiène et du caoutchouc à base de chloroprène dans la couche de caoutchouc mixte en tant que seconde couche est de 40:60 à 20:80 dans un rapport massique de matière solide.

3. Gant résistant aux produits chimique selon la revendication 1 ou 2, dans lequel une couche de caoutchouc à base de chloroprène en tant que couche intermédiaire est de plus formée entre la couche de caoutchouc à base de chloroprène en tant que première couche et la couche de caoutchouc mixte contenant le caoutchouc à base de nitrile-butadiène et le caoutchouc à base de chloropène en tant que seconde couche.

4. Gant résistant aux produits chimiques selon l'une quelconque des revendications 1 à 3, dans lequel des particules de caoutchouc à base de nitrile-butadiène sont contenues dans la couche de caoutchouc mixte en tant que seconde couche dans une quantité de 20 à 60 parties en masse, sur une base de teneur de matière solide, rapportée à 100 parties en masse d'un latex de la couche de caoutchouc mixte en tant que seconde couche.

5. Gant résistant aux produits chimiques selon la revendication 4, dans lequel la teneur des particules de caoutchouc à base de nitrile-butadiène est de 30 à 50 parties en masse, sur une base de matière solide, rapportée à 100 parties en masse de la couche de caoutchouc mixte en tant que seconde couche.

6. Gant résistant aux produits chimiques selon l'une quelconque des revendications 1 à 5, dans lequel l'épaisseur de la première couche se trouve dans un intervalle de 0,18 à 0,23 mm.

7. Gant résistant aux produits chimiques selon l'une quelconque des revendications 1 à 6, dans lequel l'épaisseur de la seconde couche se trouve dans un intervalle de 0,14 à 0,18 mm.

8. Gant résistant aux produits chimiques selon l'une quelconque des revendications 3 à 7, dans lequel l'épaisseur de la couche intermédiaire se trouve dans un intervalle de 0,18 à 0,23 mm.
